(19) **Europäisches Patentamt / European Patent Office / Office européen des brevets**

(11) **EP 3 259 547 B1**

(12) **FASCICULE DE BREVET EUROPEEN**

(45) Date de publication et mention de la délivrance du brevet:
**27.06.2018 Bulletin 2018/26**

(51) Int Cl.:
**F28F 27/00** (2006.01)    **G05B 23/02** (2006.01)
**G06F 21/52** (2013.01)

(21) Numéro de dépôt: **16712947.7**

(22) Date de dépôt: **19.02.2016**

(86) Numéro de dépôt international:
**PCT/FR2016/050381**

(87) Numéro de publication internationale:
**WO 2016/132079 (25.08.2016 Gazette 2016/34)**

(54) **PROCÉDÉ DE DÉTECTION DE DÉFICIENCES D'UN AÉRORÉFRIGÉRANT D'UNE INSTALLATION THERMIQUE EN FONCTIONNEMENT**

**VERFAHREN ZUR ERKENNUNG VON MÄNGELN IN EINEM KÜHLTURM EINER THERMISCHEN ANLAGE IM BETRIEB**

**METHOD FOR DETECTING DEFICIENCIES IN A COOLING TOWER OF A THERMAL FACILITY IN OPERATION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2015 FR 1551439**

(43) Date de publication de la demande:
**27.12.2017 Bulletin 2017/52**

(73) Titulaire: **Electricité de France**
**75008 Paris (FR)**

(72) Inventeurs:
• **DUQUENNOY, Christophe**
  **38920 Crolles (FR)**
• **WOLF, Claude**
  **67120 Molsheim (FR)**
• **CHARREL, Véronique**
  **69003 Lyon (FR)**

(74) Mandataire: **Regimbeau**
**87 rue de Sèze**
**69477 Lyon Cedex 06 (FR)**

(56) Documents cités:
**EP-A2- 2 114 081      EP-A2- 2 787 296**
**US-A1- 2013 218 483**

## Description

### DOMAINE TECHNIQUE GENERAL

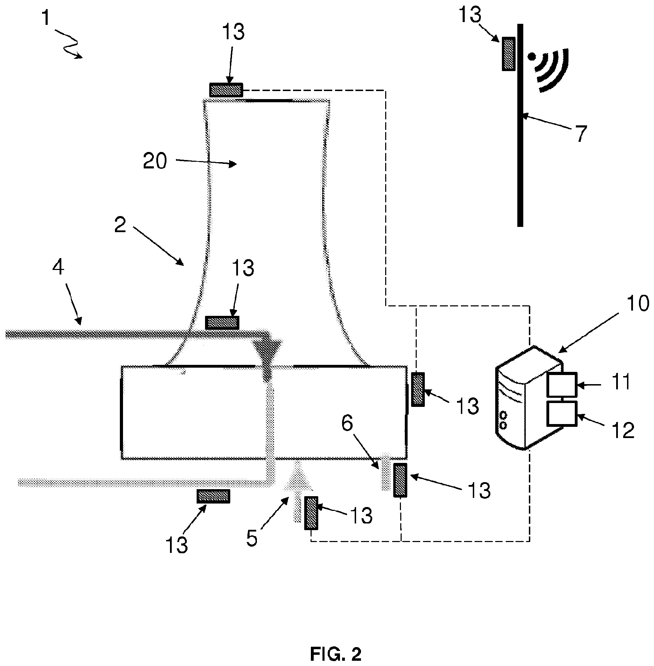

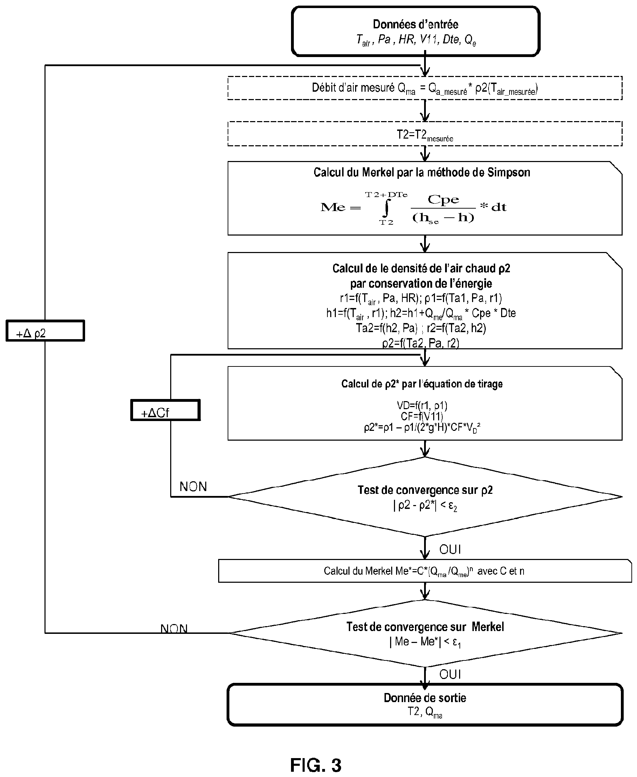

La présente invention concerne un procédé de détection de déficiences d'un aéroréfrigérant d'une installation thermique. Le document US 2013/0218483A1 divulgue un procédé de détection de déficiences d'un aéroréfrigérant d'une installation thermique (voir figures 2 ou 3, et/ ou [0012]) en fonctionnement dans un environnement donné comprenant la mise en oeuvre d'étapes de :(a) Mesure par une pluralité de capteurs d'un ensemble de valeurs de paramètres physiques relatifs à l'aéroréfrigérant, dont au moins un paramètre endogène propre au fonctionnement de l'aéroréfrigérant (b) Comparaison par des moyens de traitement de données d'au moins une valeur optimale attendue dudit paramètre endogène avec une valeur attendue;(c) Détermination par les moyens de traitement de données d'au moins une fonction de l'aéroréfrigérant potentiellement déficiente en fonction de l'écart entre la valeur mesurée et la valeur optimale attendue dudit paramètre endogène;(d) Déclenchement par les moyens de traitement de données d'une alarme si au moins une fonction de l'aéroréfrigérant est testée déficiente.

### ETAT DE L'ART

Les centrales électriques dites thermiques (ce terme englobant les centrales nucléaires et les centrales à flammes) utilisent l'énergie d'une source chaude pour vaporiser un fluide caloporteur, typiquement de l'eau.

La vapeur ainsi produite est admise dans une turbine où sa détente provoque la rotation d'un rotor de la turbine, accouplé à un alternateur qui transforme l'énergie mécanique de la turbine en énergie électrique. À la sortie de la turbine, la vapeur est condensée dans un condenseur alimenté par une source froide. Elle se retrouve à l'état liquide et ce condensat est renvoyé dans le système d'alimentation en eau pour un nouveau cycle de vaporisation.

Pour de nombreuses centrales de forte puissance, la source froide est un ou plusieurs aéroréfrigérants. Les aéroréfrigérants ont pour fonction d'évacuer vers le milieu extérieur la chaleur issue du condenseur en faisant circuler de l'eau chaude dans un flux d'air.

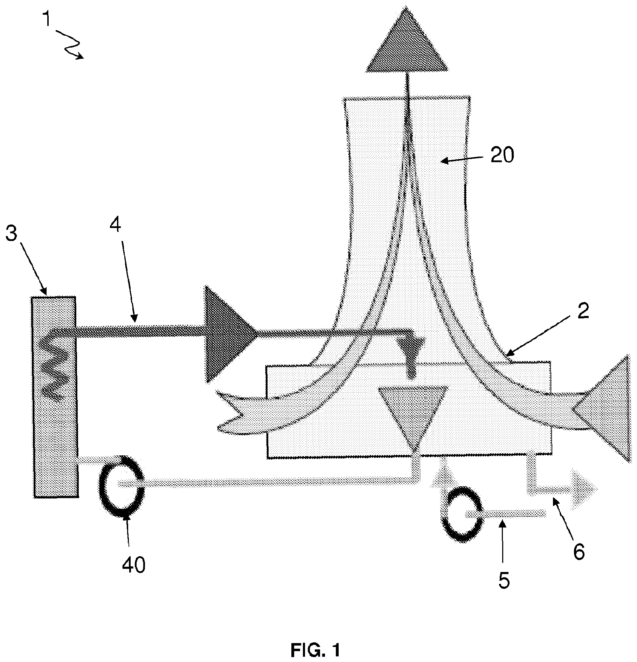

En référence à la **figure 1,** on entend souvent par tour aéroréfrigérante 2 un équipement comprenant une grande tour 20 en béton ayant le plus souvent la forme d'un hyperboloïde. L'eau à refroidir, provenant du condenseur 3 via un circuit 4 alimenté par une pompe 40, est amenée par une conduite au sein de la tour 20. À partir de cette arrivée elle est dispersée à l'aide d'un réseau de rampes percées, puis tombe par écoulement gravitaire sur un garnissage en nid d'abeille afin d'obtenir une grande surface de contact entre le liquide et l'air. Un flux d'air circule à contre-courant. Une partie de l'eau va s'évaporer, ce qui favorise l'échange de chaleur et améliore le refroidissement de l'eau.. Pour compenser cette évaporation et éviter que les espèces dissoutes dans l'eau de refroidissement ne se concentrent trop, un complément d'eau froide est apporté par un circuit d'appoint 5 prélevant l'eau d'une rivière. Un circuit de purge 6 permet de renvoyer le trop plein d'eau qui en découle à la rivière.

Les tours aéroréfrigérantes apportent satisfactions, mais s'avèrent un élément critique d'une centrale thermique. En effet, une déficience (et de façon générale une perte d'efficacité) de l'aéroréfrigérant entraîne une perte très importante du rendement de la centrale et donc de la production électrique, voire un arrêt d'urgence pour raison de sécurité si l'aéroréfrigérant n'est plus capable d'évacuer suffisamment de chaleur.

Il est connu de procéder à des essais comprenant la vérification de paramètres physiques de l'aéroréfrigérant, mais les solutions existantes ne font que constater une perte d'efficacité de l'aéroréfrigérant. De plus on constate que ces performances sont très dépendantes des conditions environnementales (vent, température de l'air ou de la rivière, etc.).

En outre, des normes telles que EN 14705 (en train d'être remplacée ISO 16345) et CTI ATC 105 proposent des protocoles de réalisation d'essais de performance thermique ponctuels. Ces essais d'une durée d'une semaine environ impliquent la mise en oeuvre d'une logistique lourde et couteuse pour gérer toutes les phases de l'essai : déplacement sur site, montage acquisitions, démontage, analyse. C'est pourquoi cette solution n'est en pratique jamais mise en oeuvre pour le suivi dans la durée de l'évolution de la performance. Les essais de performance sont dans le meilleur des cas seulement réalisés avant et après une intervention lourde de maintenance ou en cas de suspicion de dysfonctionnement.

Il serait souhaitable qu'une solution technique permettant de suivre efficacement et objectivement l'évolution de la performance des aéroréfrigérants, de sorte à permettre la détection rapide voire anticipée des défaillances de fonctionnement, l'identification de leur origine et la quantification des pertes associées, ou de planifier des opérations de maintenance.

L'invention vient améliorer la situation.

### PRESENTATION DE L'INVENTION

L'invention propose selon un premier aspect un procédé de détection de déficiences d'un aéroréfrigérant d'une installation thermique en fonctionnement dans un environnement donné comprenant la mise en oeuvre d'étapes de :

(a) Mesure par une pluralité de capteurs d'un ensemble de valeurs de paramètres physiques relatifs à l'aéroréfrigérant, dont au moins un paramètre endogène propre au fonctionnement de l'aéroréfrigérant et au moins un paramètre exogène propre audit environnement ;

(b) Calcul par des moyens de traitement de données d'au moins une valeur optimale attendue dudit paramètre endogène en fonction desdites valeurs des paramètres physiques et d'un modèle ;

(c) Détermination par les moyens de traitement de données d'au moins une fonction de l'aéroréfrigérant potentiellement déficiente en fonction de l'écart entre la valeur mesurée et la valeur optimale attendue dudit paramètre endogène et/ou de la variation dudit écart ;

(d) Test par les moyens de traitement de données de chaque fonction de l'aéroréfrigérant déterminée comme potentiellement déficiente ;

(e) Déclenchement par les moyens de traitement de données d'une alarme si au moins une fonction de l'aéroréfrigérant est testée déficiente.

Le dispositif selon l'invention est avantageusement complété par les caractéristiques suivantes, prises seules ou en une quelconque de leur combinaison techniquement possible :

- chaque paramètre physique mesuré est choisi parmi l'ensemble des paramètres physiques listés par la norme ISO 16345 ;
- un paramètre endogène mesuré est la température en sortie de l'aéroréfrigérant d'un fluide caloporteur à refroidir ;
- l'installation thermique est une centrale thermique présentant un condenseur, ledit fluide caloporteur à refroidir étant l'eau d'un circuit mettant en échange thermique l'aéroréfrigérant avec le condenseur ;
- au moins six paramètres exogènes sont mesurés dont :

  - La température de l'air en entrée de l'aéroréfrigérant ;
  - L'humidité relative de l'air ambiant ;
  - La pression atmosphérique ;
  - La vitesse du vent ambiant ;
  - la température en entrée de l'aéroréfrigérant d'un fluide caloporteur à refroidir ;
  - Le débit dudit fluide caloporteur.

- l'étape (a) comprend l'application d'un moins un filtre de validité et/ou de stabilité sur les valeurs mesurées de sorte à ne prendre en compte que les mesures conforme au filtre ;
- l'application d'un filtre de validité et/ou de stabilité sur les valeurs mesurées comprend la vérification qu'au moins un paramètre physique présente une valeur et/ou une dérivée en dessous d'un seuil donné ;
- l'étape (b) comprend la correction de la dite valeur optimale attendue du paramètre endogène en fonction de données relatives à des mesures antérieures de valeurs de paramètres physiques relatifs à l'aéroréfrigérant d'une base de données de référence stockée dans des moyens de stockage de données ;

- l'étape (c) comprend le stockage desdites valeurs mesurées à l'étape (a) des paramètres physiques relatifs à l'aéroréfrigérant si aucune fonction de l'aéroréfrigérant n'est déterminée à l'étape (c) comme potentiellement déficiente ;
- l'étape (c) comprend le calcul périodique d'une valeur moyenne sur un intervalle temporel donné de l'écart entre la valeur mesurée et la valeur optimale attendue dudit paramètre endogène ;
- la variation de l'écart entre la valeur mesurée et la valeur optimale attendue dudit paramètre endogène est définie à l'étape (c) comme la différence entre deux valeurs moyennes consécutives dudit écart, l'étape (c) comprenant la comparaison de cette différence avec une pluralité de seuils prédéterminés ;
- ladite au moins une fonction de l'aéroréfrigérant potentiellement déficiente est déterminée à l'étape (c) en fonction des seuils franchis ou non par :

  - ladite différence entre deux valeurs moyennes consécutives dudit écart entre la valeur mesurée et la valeur optimale attendue dudit paramètre endogène ; et/ou
  - la valeur moyenne actuelle dudit l'écart ;

- une déficience d'au moins une fonction de l'aéroréfrigérant est déterminée comme :

  - possible si ladite différence entre deux valeurs moyennes consécutives (ETOAJ) dudit écart entre la valeur mesurée et la valeur optimale attendue de la température de sortie dépasse 0.5°K ;
  - très probable si ladite différence entre deux valeurs moyennes consécutives (ETOAJ) dudit écart entre la valeur mesurée et la valeur optimale attendue de la température de sortie dépasse 2°K ;

- l'étape (c) prend également en compte la valeur d'au moins un paramètre exogène pour déterminer quelle fonction est potentiellement déficiente.

Selon un deuxième aspect, l'invention concerne un système de détection de déficiences d'un aéroréfrigérant d'une installation thermique en fonctionnement dans un environnement donné comprenant :

- une pluralité de capteurs mesurant un ensemble de valeurs de paramètres physiques relatifs à l'aéroréfrigérant, dont au moins un paramètre endogène propre au fonctionnement de l'aéroréfrigérant et au moins un paramètre exogène propre audit environnement ;
- des moyens de traitement de données configurés pour mettre en oeuvre :

○ un module de calcul en fonction desdites valeurs des paramètres physiques et d'un modèle d'au moins une valeur optimale attendue dudit paramètre endogène ;

○ un module de détermination d'au moins une fonction de l'aéroréfrigérant potentiellement déficiente en fonction de l'écart entre la valeur mesurée et la valeur optimale attendue dudit paramètre endogène et/ou de la variation dudit écart ;

○ un module de test de chaque fonction de l'aéroréfrigérant déterminée comme potentiellement déficiente ;

○ un module de déclenchement d'une alarme si au moins une fonction de l'aéroréfrigérant est testée déficiente.

Selon des caractéristiques avantageuses :

- le système comprend en outre des moyens de stockage de données stockant une base de données de référence de mesures antérieures de valeurs de paramètres physiques relatifs à l'aéroréfrigérant.

Selon un troisième aspect, l'invention concerne une installation thermique comprenant au moins un aéroréfrigérant et un système selon le deuxième aspect de détection de déficiences dudit aéroréfrigérant.

Selon des caractéristiques avantageuses :

- l'installation est une centrale thermique pour la production d'électricité.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 précédemment décrite est un schéma d'une centrale thermique à aéroréfrigérant ;
- la figure 2 est un schéma représentant l'intégration d'un système de détection de déficiences à un aéroréfrigérant d'une centrale thermique pour la mise en oeuvre du présent procédé de détection de déficiences de l'aéroréfrigérant en fonctionnement dans un environnement donné
- la figure 3 représente schématiquement un modèle permettant de calculer une température optimale attendue en sortie de l'aéroréfrigérant lors de la mise en oeuvre du procédé selon l'invention ;
- les figures 4a-4c sont trois exemples de courbes illustrant l'évolution de la température optimale attendue théorique, réelle ou l'écart entre ces deux valeurs en fonction de la vitesse du vent ;
- la figure 5 est un diagramme représentant un détail d'un mode de réalisation de l'étape (c) du procédé selon l'invention.

DESCRIPTION DETAILLEE

*Principe de l'invention*

En référence à la **figure 2,** l'invention propose un procédé de détection de déficiences d'un aéroréfrigérant 2 d'une installation thermique 1 en fonctionnement dans un environnement donné. L'aéroréfrigérant 2 est configuré pour refroidir un fluide caloporteur de l'installation 1. Ce procédé est conçu pour être mis en oeuvre continument dans la durée pendant la vie de l'aéroréfrigérant 2, et non seulement pendant une campagne d'essais.

De façon préférée (et on utilisera cet exemple dans la suite de la description), l'installation 1 est une centrale (électrique) thermique, en particulier une centrale à flamme ou nucléaire, mais on comprendra que l'installation 1 peut être n'importe quelle infrastructure industrielle nécessitant une dissipation d'énergie. Alternativement aux centrales, l'installation thermique 1 peut par exemple être un site pétrochimique, une fonderie, un data center, etc.

De même, le présent procédé ne concerne pas seulement les aéroréfrigérants de type tour à tirage naturel (qui sont ceux bien connus utilisés pour les centrales nucléaires), dans la mesure où il existe de nombreux aéroréfrigérants qui n'ont pas cette forme et pour lesquels le flux d'air est créé par des ventilateurs. Dans la suite de la présente description, on prendra l'exemple non limitatif d'un aéroréfrigérant 2 à tirage naturel à contre-courant pour lequel le fluide caloporteur à refroidir est de l'eau d'un circuit 4 de refroidissement d'un condenseur 3. L'air atmosphérique monte dans la tour et l'eau du circuit 4 y ruisselle et descend.

Le procédé est mis en oeuvre grâce à un système 10 de surveillance des performances de l'aéroréfrigérant, couplé à ce dernier.

Le système 10 se compose essentiellement de moyens de traitement de données 11 tels qu'un processeur, de moyens de stockage de données 12 tel qu'une mémoire (par exemple un disque dur) stockant une base de données de référence relatives à des essais passés (voir plus loin), et d'un réseau de capteurs 13. Chaque capteur 13 mesure les valeurs d'un ou plusieurs paramètres physiques relatifs à l'aéroréfrigérant 2. Les moyens de traitement de données 11 et les moyens de stockage de données 12 sont généralement ceux d'un poste de travail, typiquement pourvu d'une interface d'entrée et de sortie pour restituer les résultats du procédé (et le cas échéant déclencher une alarme, de façon visuelle ou sonore, en cas de déficience actuelle ou imminente détectée). Alternativement, les moyens de traitement de données 12 peuvent être ceux d'un serveur distant relié au reste du système 10 par un réseau du type internet.

Comme l'on verra plus loin, certains de ces paramètres physiques sont dits « endogènes » c'est-à-dire qu'ils sont propres au fonctionnement de l'aéroréfrigérant 2, ce sont des paramètres dont la valeur est une « conséquence » de l'état de l'aérorefrigérant 2. Dans la suite de la présente description, on supposera qu'un seul paramètre exogène est étudié, en l'espèce la « température de sortie », c'est-à-dire la température de l'eau du circuit 4 en sortie de l'aéroréfrigérant 2. On comprendra que d'autres paramètres endogènes peuvent être choisis, par exemple le débit d'eau évaporé par l'aéroréfrigérant 2. On note qu'une combinaison de deux paramètres endogènes peut être utilisée, telle que le ratio débit d'eau entrant sur débit d'air entrant. D'autres paramètres physiques sont dits « exogènes », c'est-à-dire qu'ils sont propres audit environnement de l'aéroréfrigérant 2. Cette définition doit être prise au sens large, et par paramètre exogène on entendra tout paramètre dont la valeur est une « cause » de l'état de l'aéroréfrigérant 2, i.e. influant sur la valeur du ou des paramètres endogènes. Les paramètres exogènes sont soit des paramètres directement contrôlés par l'opérateur (par exemple la puissance thermique produite par la centrale ou le débit d'eau injectée via le circuit d'appoint 6) ou des paramètres purement externes comme la vitesse du vent ou la température de l'air ambiant. Il est à noter que selon le modèle choisi, certains paramètres endogènes peuvent devenir exogènes et vice versa (par exemple le paramètre endogène d'un modèle peut être « fixé » et devenir un paramètre de commande, alors qu'un autre paramètre auparavant fixé devient une conséquence des autres, i.e. un paramètre endogène)

Dans la suite de la présente description on prendra comme exemple principal de paramètre exogène la vitesse du vent, mais on pourra citer :

- la direction du vent,
- l'humidité de l'air ambiant,
- la température de l'air ambiant,
- la pluviométrie,
- la pression atmosphérique,
- la température de l'air en entrée de l'aéroréfrigérant 2,
- la température d'eau chaude en entrée de l'aéroréfrigérant 2,
- la température de l'eau de purge,
- etc.

De façon générale, on comprendra que le système 10 comprend un réseau de capteur 13 connectés avec ou sans fil aux moyens de traitement de données 11. Comme on voit sur la figure 2, la centrale 1 peut être équipé d'un mat météo 7 (optimalement disposé à une distance entre 500 m et 2 km de l'aéroréfrigérant 2) en haut duquel sont installés un ou plusieurs capteurs 13 mesurant les valeurs de paramètres physiques liés au climat (vitesse et direction du vent, pluviométrie, températures, etc.). Typiquement, une vingtaine de capteurs 13 mesurent à intervalles réguliers autant de grandeurs physiques. De façon préférée, les grandeurs mesurées seront choisies parmi celles listées pour la norme EN 14705/ISO 16345.

*Procédé - calcul de l'ETOA*

Le présent procédé de détection de déficiences d'un aéroréfrigérant 2 d'une centrale thermique 1 en fonctionnement dans un environnement donné commence par la mise en oeuvre par les capteurs 13 d'une étape (a) de mesure d'un ensemble de valeurs de paramètres physiques relatifs à l'aéroréfrigérant 2, dont au moins un paramètre endogène propre au fonctionnement de l'aéroréfrigérant et au moins un paramètre exogène propre audit environnement. Comme expliqué, cette étape de mesure peut être faite à intervalles réguliers. Les valeurs acquises sont transmises aux moyens de traitement de données 11.

L'acquisition de la valeur de chacun des paramètres peut être effectuée à intervalle régulier, par exemple toutes les minutes (voire même plusieurs fois par minute ou toutes les secondes). Sur un intervalle de temps (par exemple dix minutes, mais des durées d'une minute à une heure donnent de bons résultats), les différentes valeurs acquises peuvent être localement moyennées de façon à constituer ce que l'on appelle un essai. Un essai est par conséquent défini comme un vecteur des valeurs des paramètres moyennés sur un petit nombre de mesures consécutives. A supposer qu'un essai est obtenu toutes les dix minutes, on peut ainsi disposer de plus de cent essais par jour. Alternativement, on comprendra qu'on n'est pas limité à cette notion d'essai regroupant une pluralité de mesures et que chaque instant de mesure peut être traité indépendamment (comme un essai) dans la suite du procédé.

Chaque essai n'est pas forcément fiable, et de façon préférée l'étape (a) comprend la vérification des valeurs mesurées avant de prendre en compte l'essai. En d'autres termes, sont vérifiées un ensemble de condition de stabilité et de validité des données.

Pour cela sont mis en oeuvre un ou plusieurs filtres (de stabilité et/ou de fiabilité) de sorte à ne prendre en compte que les mesures conforme au filtre (i.e. pertinentes pour caractériser la performance de l'aéroréfrigérant 2). Par exemple, sont écartées :

- les mesures ayant présenté une variation trop élevée dans un laps de temps donné (par exemple plus de 5% sur une heure),
- certains paramètres exogènes présentent des valeurs trop élevées (par exemple vent de plus de 4 m.s$^{-1}$).

Certains filtre plus complexes (allant plus loin qu'une simple comparaison de la valeur ou de la dérivée avec un seuil peut être mises en oeuvre), telle que la vérification d'un temps suffisant depuis le dernier pic (utilise par exemple pour le vent).

Si la mesure est écartée, l'essai est considéré comme « non valide » et n'est pas pris en compte. Seuls les essais gardés seront ensuite traités dans la suite du procédé.

Il est à noter que les seuils associés aux filtres sont ajustables pour trouver le meilleur compris de sorte à avoir suffisamment d'essais gardés pour avoir la meilleure précision dans le résultat, sans pour autant garder des essais potentiellement moins fiables. Par exemple, sur un site venté, le seuil sur la vitesse du vent pourra être augmenté voire supprimé.

Dans une seconde étape (b), les moyens de traitement de données 11 calculent en fonction desdites valeurs des paramètres physiques et d'un modèle au moins une valeur optimale attendue dudit paramètre endogène. Par valeur optimale, on entend la valeur théorique que devrait présenter ce paramètre endogène en l'absence de déficiences de l'aéroréfrigérant 2. Un écart léger avec cette valeur attendue sera de l'ordre des fluctuations normales, mais un écart plus important sera le signe d'une déficience, comme l'on verra plus loin.

Dans le cas où le paramètre endogène est la température de l'eau en sortie, ladite valeur optimale attendue est appelée la TOA (température optimale attendue). La différence entre la TOA et la température de sortie effectivement mesurée en tant que paramètre endogène est appelée l'ETOA (écart de TOA).

On note que l'écart relatif (i.e. le ratio) peut être estimé plutôt que l'écart réel. C'est ce qui est par exemple proposé si le paramètre endogène est le débit d'eau évaporé. Le ratio débit d'eau évaporé théorique sur débit d'eau évaporé optimal est appelé la « capabilité » de l'aéroréfrigérant.

Le modèle utilisé est un modèle physique s'appuyant sur des équations thermodynamiques ou des courbes de performance décrivant le fonctionnement attendu de l'aéroréfrigérant 2. Ce modèle est soit disponible dès la conception de la centrale thermique 1, soit mises à jour suite à la dernière rénovation de l'aéroréfrigérant 2.

A titre d'exemple, on pourra utiliser :

- la loi de Merkel donnée par l'équation :

$$Me = C\left(\frac{Qma}{Qte}\right)^n$$

Où $= \int_{T2}^{T2+Dte} \frac{Cpe}{(hs-h)} dT$ , avec $Q_{ma}$ le débit massique d'air, $Q_{me}$ le débit massique d'eau, $T_2$ la température de sortie de l'eau, $h$ l'enthalpie de l'air, $h_S$ est l'enthalpie de l'air saturé à la température de l'eau, $Cp_e$ la chaleur spécifique de l'eau, $Dte$ est l'écart de température (i.e. $T_2+Dte$ est la température d'entrée) ;

- L'équation de pertes de charges

$$\rho_1 - \rho_2 = \frac{1}{2}\frac{\rho_1}{gH}C_f.V_D^2$$ , avec $\rho_1$ et $\rho_2$ la

densité de l'air en entrée et en sortie de l'aéroréfrigérant 2, $H$ la hauteur de tirage, $g$ l'accélération de la pesanteur et $V_D$ la vitesse du vent.

$C$, $n$ et $C_f$ sont des constantes qui peuvent être fournies par le constructeur lors des essais de réception de mise en service de l'aéroréfrigérant ou bien ils sont calculés à partir des premiers mois de données acquises par le système.

En référence à la **figure 3,** en utilisant ces équations, la TOA en tant que paramètre endogène peut être estimée en fonction des valeurs de six paramètres exogènes :

- La température de l'air en entrée $T_{air}$ ;
- L'humidité relative de l'air en entrée $HR$ ;
- La vitesse du vent $V_D$ ;
- La pression ambiante $P_a$ ;
- Le débit d'eau circulant dans le circuit 4 $Q_e$ ;
- La différence de température de l'eau entre la sortie et l'entrée $Dte$ (en pratique, le paramètre exogène est la température d'entrée, auquel on soustrait la température de sortie).

Certains paramètres peuvent en outre être utilisés, tel que la température de l'eau d'appoint (sur le circuit 6) et la direction du vent.

Il est à noter qu'alternativement, certains de ces paramètres peuvent être fixés comme constantes.

La figure 3 représente un algorithme itératif qui permet après un certain nombre d'itérations (faisant varier les valeurs de $Qma$ (le débit massique d'air) et $T2$ (la température de sortie)) de résoudre les équations ci-avant et d'obtenir la TOA $T2$. On comprendra que l'invention n'est en rien limitée à cet algorithme qui n'est qu'une possibilité parmi d'autres.

De façon préférée, le système 10 comprend des moyens de stockage de données 12 stockant une base de données d'essais antérieurs. On supposera que la base de données prend en compte à la fois :

- des essais nominaux, c'est-à-dire que d'une part ils sont conformes à l'éventuel filtrage de stabilité/validité évoqué avant, et que d'autre part il s'est révélé qu'aucune déficience n'affectait l'aéroréfrigérant 2 lors de cet essai) ; et
- des essais non nominaux, c'est-à-dire pour lesquels un problème soit de mesure (capteur déficient) soit de valeur (déficience potentielle de l'aéroréfrigérant 2) est identifié. Ces essais non nominaux offrent beaucoup d'informations qui pourront être exploitées pour améliorer l'installation 1.

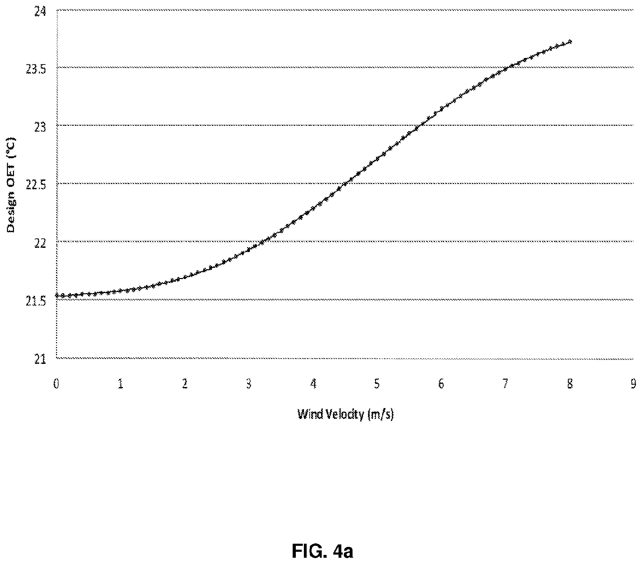

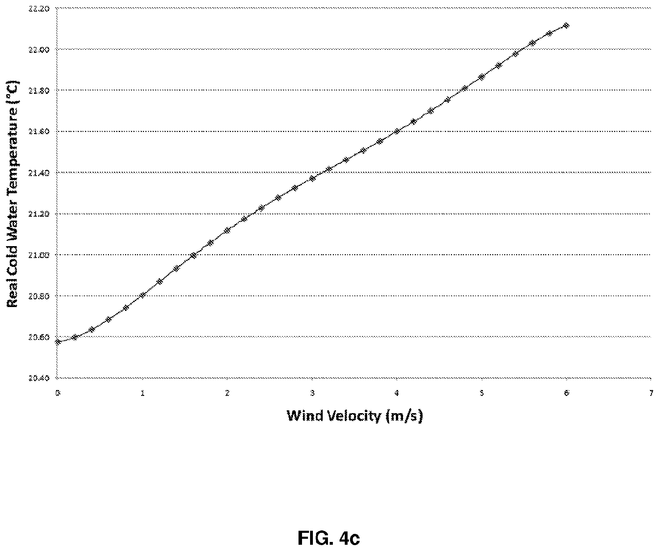

La prise en compte de ces essais antérieurs permet d'affiner la valeur calculée de la valeur optimale attendue, de la façon que l'on voit aux **figures 4a-4c**.

Ces dernières représentent l'exemple de l'effet du vent sur la température optimale attendue (en particulier, la figure 4a représente la TOA « théorique » en fonction de $V_D$, en mettant des valeurs nominales pour tous les autres paramètres de sorte à disposer d'une fonction en dimension 1).

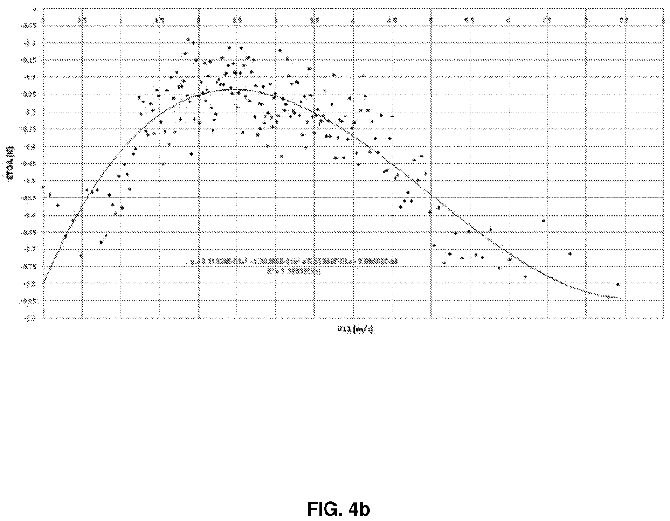

L'idée est que la prise en compte purement théorique de l'effet du vent n'est pas suffisante, car elle omet des détails tels que la présence d'obstacles autour de l'aéroréfrigérant (la salle des machines, d'autres aéroréfrigérants, etc.). La figure 4b représente ainsi un nuage de points chacun représentant un essai antérieur, donnant l'ETOA, c'est-à-dire l'écart de TOA obtenu, pour une valeur de vitesse de vent mesurée lors de l'essai.

Par extrapolation, on peut obtenir une fonction de correction. La courbe 4c représente la TOA « expérimentale » (c'est à la dire la courbe théorique corrigée avec les données réelles) en fonction de $V_D$, correspondant à la somme des courbes des figures 4a et 4b.

A l'issue de l'étape (b), on dispose de la valeur optimale théorique du paramètre étudié (typiquement la TOA) et/ou l'écart de cette valeur théorique avec la valeur mesurée (typiquement l'ETOA). On va pouvoir en déduire les éventuelles déficiences actuelles ou imminentes de l'aéroréfrigérant 2.

*Procédé - détermination de déficiences*

Dans une étape (c), les moyens de traitement de données 11 déterminent au moins une fonction de l'aéroréfrigérant 2 potentiellement déficiente en fonction de l'écart entre la valeur mesurée et la valeur optimale attendue dudit paramètre endogène et/ou de la variation dudit écart (c'est ce que l'on appelle la vitesse de dérive). Comme expliquée, la déficience peut être actuelle (problème technique nécessitant une intervention urgente) ou future (imminente ou à plus long terme, i.e. une anomalie nécessitant de prévoir une maintenance à court ou moyen terme, car dégradant petit à petit les performances de l'aéroréfrigérant 2) est détectée).

Pour cela, de façon avantageuse les moyens de traitement de données 11 commencent par agréger les ETOA obtenus sur un intervalle de temps, par exemple une journée, en en faisant une moyenne arithmétique (on parle alors d'ETOAJ).

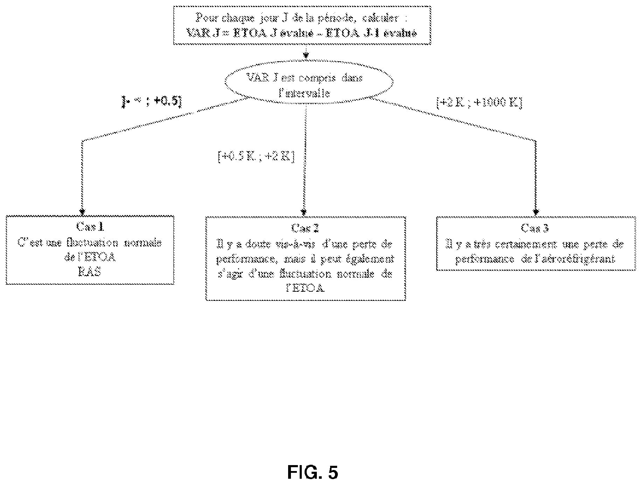

On note VAR J la variation de deux ETOAJ consécutifs. En référence à la **figure 5,** cette valeur de variation de l'ETOAJ est comparée à une pluralité de seuils :

- Si VAR J<0.5K, alors la fluctuation est normale ;
- Si 0.5K>VAR J>2K, alors il y a un doute ;
- Si VAR J>2K, alors une défaillance de l'aéroréfrigérant 2 est fortement suspectée.

Dans les cas 2 et 3, la défaillance d'une fonction de l'aéroréfrigérant est explorée. Parmi les fonctions potentiellement fautives, on citera :

- Vanne de contournement maintenue ouverte ;
- Débordement du bassin d'eau chaude (courants croisés) ;
- Débordement du château d'eau (contre-courant),
- Nombreux jets bâtons,
- Retour sur dispersion complète non satisfaisante après sectorisation ;
- Fonctionnement hors-gel injustifié ;
- Etc.

En fonction de la valeur de VAR J et surtout d'ETOAJ (plus ETOAJ est élevé, plus la chute de performance est forte) certains fonctions peuvent être suspectées plus que d'autres. La valeur de certains paramètres peut également être utilisée.

Par exemple, le mode hors-gel est principalement suspecté lorsqu'on détecte dans un premier temps une VAR J très élevée concomitante avec une baisse continue de température d'air proche de 0°C (mode hors-gel « normal ») suivie d'une hausse de température d'air avec VAR J proche de 0 (mode hors-gel resté bloqué).

Des filtres automatiques permettent ainsi de suspecter certaines fonctions et d'envisager soit une intervention technique locale (petit problème tel qu'une vanne de contournement maintenue ouverte), soit de plannifier/prioriser une intervention de maintenance (cas de dérives bien plus lentes mais persistantes).

Dans tous les cas, une étape (d) comprend la mise en oeuvre d'un test de chaque fonction de l'aéroréfrigérant 2 déterminée comme potentiellement déficiente, de sorte à voir si la suspicion était fondée. Cette étape peut soit être mise en oeuvre de façon informatique, via une routine de tests, ou en demandant à un technicien une intervention (et la confirmation sur le système 10 de la suspicion de déficience).

Le cas échéant, est mise en oeuvre une étape (e) de déclenchement par les moyens de traitement de données 11 d'une alarme si au moins une fonction de l'aéroréfrigérant 2 est testée déficiente. L'alarme peut être un signal visuel (par exemple via un code couleur, en particulier rouge si la solution est une intervention urgente), ou une notification d'un problème potentiel à plus long terme si la solution est une opération de maintenance. Le type d'alarme mise en oeuvre par les moyens 11 peut dépendre de la fonction identifiée comme déficiente.

On notera que le présent procédé permet :

- D'une part d'éviter des arrêts (fortuits voire d'urgence) d'une tranche de centrale électrique en cas d'anomalie puisque des interventions techniques locales peuvent être déclenchées rapidement,
- D'autre part d'optimiser les opérations de maintenance (qui sont traditionnellement effectuées à des moments prédéterminés plutôt que quand elles sont nécessaires) ;
- Mais encore de proposer une alternative à la baisse de charge dans le cas de certaines anomalies telle qu'un crise d'entartrage.

Il est également à noter que les essais peuvent comme expliqué venir enrichir ladite base de données d'essais. En d'autres termes, l'étape (c) comprend avantageusement le stockage desdites valeurs mesurées à l'étape (a) des paramètres physiques relatifs à l'aéroréfrigérant 2.

On note que les résultats des éventuels filtres peuvent également être stockés dans la base de données.

*Système et centrale*

Selon un deuxième aspect, est proposé le système 10 pour la mise en oeuvre du présent procédé de détection de déficiences d'un aéroréfrigérant 2 d'une centrale thermique 1 en fonctionnement dans un environnement donné.

Ce système 10 de détection de déficiences d'un aéroréfrigérant 2 d'une centrale thermique 1 en fonctionnement dans un environnement donné comprend comme expliqué des capteurs 13, des moyens de traitement de données 11 et avantageusement des moyens de stockage de données 12.

Les capteurs 13 mesurent (à intervalles réguliers) un ensemble de valeurs de paramètres physiques relatifs à l'aéroréfrigérant 2, dont au moins un paramètre endogène propre au fonctionnement de l'aéroréfrigérant 2 et au moins un paramètre exogène propre audit environnement.

Les moyens de traitement de données 11 sont configurés pour mettre en oeuvre :

  ◦ un module de calcul en fonction desdites valeurs des paramètres physiques et d'un modèle d'au moins une valeur optimale attendue dudit paramètre endogène ;
  ◦ un module de détermination d'au moins une fonction de l'aéroréfrigérant 2 potentiellement déficiente en fonction de l'écart entre la valeur mesurée et la valeur optimale attendue dudit paramètre endogène et/ou de la variation dudit écart ;
  ◦ un module de test de chaque fonction de l'aéroréfrigérant 2 déterminée comme potentiellement déficiente ;
  ◦ un module de déclenchement d'une alarme si au moins une fonction de l'aéroréfrigérant 2 est testée déficiente.

Les moyens de stockage de données 12 stockent une base de données de référence de mesures antérieures de valeurs de paramètres physiques relatifs à l'aéroréfrigérant 2.

Selon un troisième aspect, est proposée l'installation thermique 1 (typiquement la centrale électrique, en particulier à flamme ou nucléaire) comprenant un système de détection de déficiences d'au moins un de ses aéroréfrigérants 2, du type de celui représenté sur la figure 2.

**Revendications**

1. Procédé de détection de déficiences d'un aéroréfrigérant (2) d'une installation thermique (1) en fonctionnement dans un environnement donné comprenant la mise en oeuvre d'étapes de :

   (a) Mesure par une pluralité de capteurs (13) d'un ensemble de valeurs de paramètres physiques relatifs à l'aéroréfrigérant (2), dont au moins un paramètre endogène propre au fonctionnement de l'aéroréfrigérant (2) et au moins un paramètre exogène propre audit environnement ;
   (b) Calcul par des moyens de traitement de données (11) d'au moins une valeur optimale attendue dudit paramètre endogène en fonction desdites valeurs des paramètres physiques et d'un modèle ;
   (c) Détermination par les moyens de traitement de données (11) d'au moins une fonction de l'aéroréfrigérant (2) potentiellement déficiente en fonction de l'écart entre la valeur mesurée et la valeur optimale attendue dudit paramètre endogène et/ou de la variation dudit écart ;
   (d) Test par les moyens de traitement de données (11) de chaque fonction de l'aéroréfrigérant (2) déterminée comme potentiellement déficiente ;
   (e) Déclenchement par les moyens de traitement de données (11) d'une alarme si au moins une fonction de l'aéroréfrigérant (2) est testée déficiente.

2. Procédé selon la revendication 1, dans lequel chaque paramètre physique mesuré est choisi parmi l'ensemble des paramètres physiques listés par la norme ISO 16345.

3. Procédé selon l'une des revendications 1 et 2, dans lequel un paramètre endogène mesuré est la température en sortie de l'aéroréfrigérant (2) d'un fluide caloporteur à refroidir.

4. Procédé selon la revendication 3, dans lequel l'installation thermique (1) est une centrale thermique présentant un condenseur (3), ledit fluide caloporteur à refroidir étant l'eau d'un circuit mettant en échange thermique l'aéroréfrigérant (2) avec le condenseur (3).

**5.** Procédé selon l'une des revendications 1 à 4, dans lequel au moins six paramètres exogènes sont mesurés dont :

- La température de l'air en entrée de l'aéroréfrigérant (2) ;
- L'humidité relative de l'air ambiant ;
- La pression atmosphérique ;
- La vitesse du vent ambiant ;
- la température en entrée de l'aéroréfrigérant (2) d'un fluide caloporteur à refroidir ;
- Le débit dudit fluide caloporteur.

**6.** Procédé selon l'une des revendications 1 à 5, dans lequel l'étape (a) comprend l'application d'un moins un filtre de validité et/ou de stabilité sur les valeurs mesurées de sorte à ne prendre en compte que les mesures conforme au filtre.

**7.** Procédé selon la revendication 6, dans lequel l'application d'un filtre de validité et/ou de stabilité sur les valeurs mesurées comprend la vérification qu'au moins un paramètre physique présente une valeur et/ou une dérivée en dessous d'un seuil donné.

**8.** Procédé selon l'une des revendications 1 à 7, dans lequel l'étape (b) comprend la correction de la dite valeur optimale attendue du paramètre endogène en fonction de données relatives à des mesures antérieures de valeurs de paramètres physiques relatifs à l'aéroréfrigérant (2) d'une base de données de référence stockée dans des moyens de stockage de données (12).

**9.** Procédé selon la revendication 8, dans lequel l'étape (c) comprend le stockage desdites valeurs mesurées à l'étape (a) des paramètres physiques relatifs à l'aéroréfrigérant (2).

**10.** Procédé selon l'une des revendications 1 à 9, dans lequel l'étape (c) comprend le calcul périodique d'une valeur moyenne sur un intervalle temporel donné de l'écart entre la valeur mesurée et la valeur optimale attendue dudit paramètre endogène.

**11.** Procédé selon la revendication 10, dans lequel la variation de l'écart entre la valeur mesurée et la valeur optimale attendue dudit paramètre endogène est définie à l'étape (c) comme la différence entre deux valeurs moyennes consécutives dudit écart, l'étape (c) comprenant la comparaison de cette différence avec une pluralité de seuils prédéterminés.

**12.** Procédé selon la revendication 11, dans lequel ladite au moins une fonction de l'aéroréfrigérant (2) potentiellement déficiente est déterminée à l'étape (c) en fonction des seuils franchis ou non par :

- ladite différence entre deux valeurs moyennes consécutives dudit écart entre la valeur mesurée et la valeur optimale attendue dudit paramètre endogène ; et/ou
- la valeur moyenne actuelle dudit l'écart.

**13.** Procédé selon les revendications 3 et 12 en combinaison, dans lequel une déficience d'au moins une fonction de l'aéroréfrigérant (2) est déterminée comme :

- possible si ladite différence entre deux valeurs moyennes consécutives (ETOAJ) dudit écart entre la valeur mesurée et la valeur optimale attendue de la température de sortie dépasse 0.5°K
- très probable si ladite différence entre deux valeurs moyennes consécutives (ETOAJ) dudit écart entre la valeur mesurée et la valeur optimale attendue de la température de sortie dépasse 2°K.

**14.** Système (10) de détection de déficiences d'un aéroréfrigérant (2) d'une installation thermique (1) en fonctionnement dans un environnement donné comprenant :

- une pluralité de capteurs (13) mesurant un ensemble de valeurs de paramètres physiques relatifs à l'aéroréfrigérant (2), dont au moins un paramètre endogène propre au fonctionnement de l'aéroréfrigérant (2) et au moins un paramètre exogène propre audit environnement ;
- des moyens de traitement de données (11) configurés pour mettre en oeuvre :

  ◦ un module de calcul en fonction desdites valeurs des paramètres physiques et d'un modèle d'au moins une valeur optimale attendue dudit paramètre endogène ;
  ◦ un module de détermination d'au moins une fonction de l'aéroréfrigérant (2) potentiellement déficiente en fonction de l'écart entre la valeur mesurée et la valeur optimale attendue dudit paramètre endogène et/ou de la variation dudit écart ;
  ◦ un module de test de chaque fonction de l'aéroréfrigérant (2) déterminée comme potentiellement déficiente ;
  ◦ un module de déclenchement d'une alarme si au moins une fonction de l'aéroréfrigérant (2) est testée déficiente.

**15.** Installation thermique (1) comprenant au moins un aéroréfrigérant (2) et un système selon la revendication 14 de détection de déficiences dudit aéroréfrigérant (2).

**Patentansprüche**

1. Verfahren zur Erkennung von Mängeln eines Luftkühlers (2) einer thermischen Anlage (1) im Betrieb in einer gegebenen Umgebung, umfassend die Durchführung der Schritte:

   (a) Messen einer Menge von Werten von physikalischen Parametern in Bezug auf den Luftkühler (2) durch eine Vielzahl von Sensoren (13), von denen mindestens einer ein endogener Parameter ist, der für den Betrieb des Luftkühlers (2) charakteristisch ist, und mindestens einer ein exogener Parameter ist, der für die Umgebung charakteristisch ist;
   (b) Berechnen mindestens eines erwarteten optimalen Werts des endogenen Parameters in Abhängigkeit von den Werten von physikalischen Parametern und einem Modell durch Datenverarbeitungsmittel (11);
   (c) Bestimmen mindestens einer Funktion des potentiell mangelhaften Luftkühlers (2) in Abhängigkeit von der Diskrepanz zwischen dem gemessenen Wert und dem erwarteten optimalen Wert des endogenen Parameters und/oder der Schwankung der Diskrepanz durch die Datenverarbeitungsmittel (11);
   (d) Testen jeder Funktion des als potentiell mangelhaften bestimmten Luftkühlers (2) durch die Datenverarbeitungsmittel (11);
   (e) Auslösen eines Alarms durch die Datenverarbeitungsmittel (11), wenn mindestens eine Funktion des Luftkühlers (2) als mangelhaft getestet wird.

2. Verfahren nach Anspruch 1, wobei jeder gemessene physikalische Parameter aus der Menge von physikalischen Parametern ausgewählt ist, die von der Norm ISO 16345 aufgelistet werden.

3. Verfahren nach einem der Ansprüche 1 und 2, wobei ein gemessener endogener Parameter die Temperatur eines zu kühlenden Wärmeträgerfluids am Austritt des Luftkühlers (2) ist.

4. Verfahren nach Anspruch 3, wobei die thermische Anlage (1) ein Wärmekraftwerk ist, das einen Kondensator (3) aufweist, wobei das zu kühlende Wärmeträgerfluid Wasser eines Kreislaufs ist, der den Luftkühler (2) in Wärmeaustausch mit dem Kondensator (3) bringt.

5. Verfahren nach einem der Ansprüche 1 bis 4, wobei mindestens sechs exogene Parameter gemessen werden, darunter:

   - die Temperatur der Luft am Eintritt des Luftkühlers (2);

   - die relative Feuchte der Umgebungsluft;
   - der atmosphärische Druck;
   - die Geschwindigkeit des Umgebungswinds;
   - die Temperatur eines zu kühlenden Wärmeträgerfluids am Eintritt des Luftkühlers (2);
   - der Durchsatz des Wärmeträgerfluids.

6. Verfahren nach einem der Ansprüche 1 bis 5, wobei der Schritt (a) das Anwenden mindestens eines Gültigkeits- und/oder Stabilitätsfilters auf die gemessene Werte umfasst, um nur die Messungen gemäß dem Filter zu berücksichtigen.

7. Verfahren nach Anspruch 6, wobei das Anwenden eines Gültigkeits- und/oder Stabilitätsfilters auf die gemessene Werte das Verifizieren umfasst, dass mindestens ein physikalischer Parameter einen Wert und/oder eine Ableitung unter einem gegebenen Grenzwert aufweist.

8. Verfahren nach einem der Ansprüche 1 bis 7, wobei der Schritt (b) das Korrigieren des erwarteten optimalen Werts des endogenen Parameters in Abhängigkeit von Werten in Bezug auf frühere Messungen von Werten von physikalischen Parametern in Bezug auf den Luftkühler (2) einer Referenzdatenbank, die in Datenspeichermitteln (12) gespeichert ist, umfasst.

9. Verfahren nach Anspruch 8, wobei der Schritt (c) das Speichern der in Schritt (a) gemessenen Werte von physikalischen Parametern in Bezug auf den Luftkühler (2) umfasst.

10. Verfahren nach einem der Ansprüche 1 bis 9, wobei der Schritt (c) das periodische Berechnen eines Mittelwerts der Diskrepanz zwischen dem gemessenen Wert und dem erwarteten optimalen Wert des endogenen Parameters über ein gegebenes Zeitintervall umfasst.

11. Verfahren nach Anspruch 10, wobei die Schwankung der Diskrepanz zwischen dem gemessenen Wert und dem erwarteten optimalen Wert des endogenen Parameters in Schritt (c) als die Differenz zwischen zwei aufeinanderfolgenden Mittelwerten der Diskrepanz definiert ist, wobei der Schritt (c) das Vergleichen dieser Differenz mit einer Vielzahl von vorbestimmten Grenzwerten umfasst.

12. Verfahren nach Anspruch 11, wobei die mindestens eine Funktion des potentiell mangelhaften Luftkühlers (2) im Schritt (c) in Abhängigkeit von Grenzwerten bestimmt wird, überschritten oder nicht durch:

   - die Differenz zwischen zwei aufeinanderfolgenden Mittelwerten der Diskrepanz zwischen dem gemessenen Wert und dem erwarteten optimalen Wert des endogenen Parameters; und/oder
- den tatsächlichen Mittelwert der Diskrepanz.

**13.** Verfahren nach den Ansprüchen 3 und 12 in Kombination, wobei ein Mangel mindestens einer Funktion des Luftkühlers (2) bestimmt wird als:

- möglich, wenn die Differenz zwischen zwei aufeinanderfolgenden Mittelwerten (ETOAJ) der Diskrepanz zwischen dem gemessenen Wert und dem erwarteten optimalen Wert der Austrittstemperatur 0,5 °K übersteigt,
- sehr wahrscheinlich, wenn die Differenz zwischen zwei aufeinanderfolgenden Mittelwerten (ETOAJ) der Diskrepanz zwischen dem gemessenen Wert und dem erwarteten optimalen Wert der Austrittstemperatur 2 °K übersteigt.

**14.** System (10) zur Erkennung von Mängeln eines Luftkühlers (2) einer thermischen Anlage (1) im Betrieb in einer gegebenen Umgebung, umfassend:

- eine Vielzahl von Sensoren (13), die eine Menge von Werten von physikalischen Parametern in Bezug auf den Luftkühler (2) messen, von denen mindestens einer ein endogener Parameter ist, der für den Betrieb des Luftkühlers (2) charakteristisch ist, und mindestens einer ein exogener Parameter ist, der für die Umgebung charakteristisch ist;
- Datenverarbeitungsmittel (11), die zur Durchführung konfiguriert sind:

∘ eines Moduls zum Berechnen mindestens eines erwarteten optimalen Werts des endogenen Parameters in Abhängigkeit von den Werten von physikalischen Parametern und einem Modell;
∘ eines Moduls zum Bestimmen mindestens einer Funktion des potentiell mangelhaften Luftkühlers (2) in Abhängigkeit von der Diskrepanz zwischen dem gemessenen Wert und dem erwarteten optimalen Wert des endogenen Parameters und/oder der Schwankung der Diskrepanz;
∘ eines Moduls zum Testen jeder Funktion des als potentiell mangelhaft bestimmten Luftkühlers (2);
∘ eines Moduls zum Auslösen eines Alarms, wenn mindestens eine Funktion des Luftkühlers (2) als mangelhaft getestet wird.

**15.** Thermische Anlage (1), die mindestens einen Luftkühler (2) und ein System zur Erkennung von Mängeln des Luftkühlers (2) nach Anspruch 14 umfasst.

**Claims**

**1.** Method for detecting deficiencies in a cooling tower (2) of a thermal facility (1) in operation in a given environment comprising the implementation of steps of:

(a) Measuring by a plurality of sensors (13) of a set of values of physical parameters relating to the cooling tower (2), of which at least one endogenous parameter specific to the operation of the cooling tower (2) and at least one exogenous parameter specific to said environment;
(b) Calculating by data processing means (11) of at least one expected optimal value of said endogenous parameter according to said values of the physical parameters and of a module;
(c) Determining by the data processing means (11) of at least one operation of the potentially deficient cooling tower (2) according to the difference between the measured value and the expected optimal value of said endogenous parameter and/or the variation of said difference;
(d) Testing by the data processing means (11) of each operation of the cooling tower (2) determined as potentially deficient;
(e) Triggering by the data processing means (11) of an alarm if at least one operation of the cooling tower (2) is tested deficient.

**2.** Method according to claim 1, wherein each measured physical parameter is chosen from the set of physical parameters listed by the standard ISO 16345.

**3.** Method according to one of claims 1 and 2, wherein a measured endogenous parameter is the temperature exiting the cooling tower (2) of a heat-transfer fluid to be cooled.

**4.** Method according to claim 3, wherein the thermal facility (1) is a thermal power station having a condenser (3), said heat-transfer fluid to be cooled being water from a circuit, thermally exchanging the cooling tower (2) with the condenser (3).

**5.** Method according to one of claims 1 to 4, wherein at least six exogenous parameters are measured, of which:

- The temperature of the air entering the cooling tower (2);
- The relative humidity of the ambient air;
- The atmospheric pressure;
- The speed of the ambient wind;
- The temperature entering the cooling tower (2) of a heat-transfer fluid to be cooled;
- The flow of said heat-transfer fluid.

**6.** Method according to one of claims 1 to 5, wherein step (a) comprises the application of at least one validity and/or stability filter over the measured values, so as to only consider measurements that conform with the filter.

**7.** Method according to claim 6, wherein the application of a validity and/or stability filter over the measured values comprises the verification that at least one physical parameter has a value and/or a derivative below a given threshold.

**8.** Method according to one of claims 1 to 7, wherein step (b) comprises the correction of said expected optimal value of the endogenous parameter according to the data relating to the previous measurements of values of physical parameters relating to the cooling tower (2) from a reference database stored in the data storage means (12).

**9.** Method according to claim 8, wherein step (c) comprises the storage of said values measured in step (a) of the physical parameters relating to the cooling tower (2).

**10.** Method according to one of claims 1 to 9, wherein step (c) comprises the periodic calculation of an average value over a given time interval of the difference between the measured value and the expected optimal value of said endogenous parameter.

**11.** Method according to claim 10, wherein the variation in difference between the measured value and the expected optimal value of said endogenous parameter is defined in step (c) as the difference between two consecutive average values of said difference, step (c) comprising the comparison of this difference with a plurality of predetermined thresholds.

**12.** Method according to claim 11, wherein said at least one operation of the potentially deficient cooling tower (2) is determined in step (c) according to the thresholds, crossed or not, by:

- said difference between two consecutive average values of said difference between the measured value and the expected optimal value of said endogenous parameter; and/or
- the current average value of said difference.

**13.** Method according to claims 3 and 12 combined, wherein a deficiency of at least one operation of the cooling tower (2) is determined as:

- possible if said difference between two consecutive average values (ETOAJ) of said difference between the measured value and the expected optimal value of the outlet temperature exceed 0.5°K
- very probably if said difference between two consecutive average values (ETOAJ) of said difference between the measured value and the expected optimal value of the outlet temperature exceeds 2°K.

**14.** System (10) for detecting deficiencies in a cooling tower (2) of a thermal facility (1) in operation in a given environment comprising:

- a plurality of sensors (13) measuring a set of values of physical parameters relating to the cooling tower (2), of which at least one endogenous parameter specific to the operation of the cooling tower (2) and at least one exogenous parameter specific to said environment;
- data processing means (11) configured for implementing:

  ◦ a calculation module according to said values of the physical parameters and of a model of at least one expected optimal value of said endogenous parameter;
  ◦ a module for determining at least one operation of the potentially deficient cooling tower (2) according to the difference between the measured value and the expected optimal value of said endogenous parameter and/or the variation of said difference;
  ◦ a module for testing each operation of the cooling tower (2) determined as potentially deficient;
  ◦ a module for triggering an alarm if at least one operation of the cooling tower (2) is tested deficient.

**15.** Thermal facility (1) comprising at least one cooling tower (2) and a system according to claim 14 for detecting deficiencies of said cooling tower (2).

FIG. 1

FIG. 2

Données d'entrée
$T_{air}$, $Pa$, $HR$, $V11$, $Dte$, $Q_e$

Débit d'air mesuré $Q_{ma} = Q_{a\_mesuré} * \rho2(T_{air\_mesurée})$

$T2 = T2_{mesurée}$

Calcul du Merkel par la méthode de Simpson

$$Me = \int_{T2}^{T2+DTe} \frac{Cpe}{(h_{se} - h)} * dt$$

Calcul de le densité de l'air chaud ρ2
par conservation de l'énergie
$r1 = f(T_{air}, Pa, HR)$; $\rho1 = f(Ta1, Pa, r1)$
$h1 = f(T_{air}, r1)$; $h2 = h1 + Q_{me}/Q_{ma} * Cpe * Dte$
$Ta2 = f(h2, Pa)$ ; $r2 = f(Ta2, h2)$
$\rho2 = f(Ta2, Pa, r2)$

$+\Delta \rho2$

Calcul de ρ2* par l'équation de tirage

$VD = f(r1, \rho1)$
$CF = f(V11)$
$\rho2* = \rho1 - \rho1/(2*g*H)*CF*V_D^2$

$+\Delta Cf$

NON — Test de convergence sur ρ2
$|\rho2 - \rho2*| < \varepsilon_2$

OUI

Calcul du Merkel $Me* = C*(Q_{ma}/Q_{me})^n$ avec $C$ et $n$

NON — Test de convergence sur Merkel
$|Me - Me*| < \varepsilon_1$

OUI

Donnée de sortie
$T2$, $Q_{ma}$

FIG. 3

**FIG. 4a**

**FIG. 4b**

FIG. 4c

FIG. 5

**RÉFÉRENCES CITÉES DANS LA DESCRIPTION**

**Documents brevets cités dans la description**

- US 20130218483 A1